# EUROPÄISCHE PATENTSCHRIFT

(11) **EP 0 582 956 B1**
(45) Veröffentlichungstag und Bekanntmachung des Hinweises auf die Patenterteilung: **08.01.1997**
(21) Anmeldenummer: 93112479.6
(22) Anmeldetag: 04.08.1993
(51) Int. Cl.: G01B 3/10

(54) **Rollbandmass**
Tape-measure
Mètre à ruban

(30) Priorität: 08.08.1992 DE 4226273
(43) Veröffentlichungstag der Anmeldung: 16.02.1994
(73) Patentinhaber: HOECHSTMASS BALZER GmbH, 65843 Sulzbach (DE)
(72) Erfinder: Krebs, Klaus, D-65812 Bad Soden (DE)
(74) Vertreter: Linser, Heinz

(56) Entgegenhaltungen:
- AU-B- 460 303
- DE-C- 2 545 203
- FR-A- 2 011 396
- US-A- 2 172 043

## Beschreibung

Die Erfindung betrifft ein Rollbandmaß, bestehend aus einem Gehäuse-Ober- und Gehäuse-Unterteil, einer Durchbohrung im Gehäuse-Oberteil für einen Auslöseknopf, einer im Gehäuse angeordneten Federtrommel mit Zugfeder, deren Ende mit dem Gehäuse-Unterteil verbunden ist, einer Rücklaufsperre für die Zugfeder, einem auf der Federtrommel aufgerollten flexiblen Bandmaß und einer durch den Auslösknopf betätigbaren Auslöseraste.

Ein Rollbandmaß dieser Art geht beispielsweise aus dem DE-Gebrauchsmuster 69 25 460 hervor. Der Auslöseknopf ist bei diesen Konstruktionsformen mit einem Betätigungsstift verbunden bzw. integriert, welcher an seinem im Gehäuse befindlichen Ende auf ein Auslöseorgang mit einer Sperrklinke wirkt. Der Auslöseknopf muß hierbei eine glatte und sauber bearbeitete Oberfläche aufweisen, damit er in seiner Längsrichtung frei beweglich in der Achse geführt wird. Um dies zu erreichen ist der Auslöseknopf mit seinem endseitigen Rastflügel einstückig als pilzförmiger Steller ausgebildet.

Der Auslöseknopf ragt dabei jedoch aus der Gehäuseoberfläche heraus, so daß Störungen nicht auszuschließen sind.

Aus der DE-PS 25 45 203 geht ein Rollbandmaß dieser Art hervor, bei der sowohl das Gehäuse-Oberteil als auch das Gehäuse-Unterteil Flächenteile aufweisen, welche aus den Gehäuseflächen ausgeschnitten und über verbleibende Stege mit mit dem jeweiligen Gehäuseteil verbunden sind. Die Flächenteile sind über einen in der Gehäuseachse zentral angeordneten Stift miteinander verbunden, so daß die Rückstellkräfte der Stege gegensinnig wirken. Das im Gehäuse-Oberteil ausgeschnittene zentral angeordnete Flächenteil ist als Auslöseknopf ausgebildet, während die in dem Gehäuse-Unterteil ausgeschnittene Fläche als Auslöseraste wirkt, welche nach außen durch eine Platte abgedeckt ist. Gegenüber dem zuvor aufgeführten bekannten Rollbandmaß ragt der Auslöseknopf nicht mehr aus der Gehäusefläche heraus, sondern bildet eine relativ glatte Oberfläche. Die Anzahl der verwendeten Einzelteile ist zwar relativ gering, jedoch ist es erforderlich, beide Gehäuseteile mit Einschnitten zu versehen und die Verbindungsstege elastisch auszubilden. Um die Elastizität der Verbindungsstege zu erreichen, welche integraler Bestandteil des Gehäuses sind, ist eine besondere Auswahl der zu verwendenden Kunststoffe erforderlich, so daß hier nur ein relativ enger Spielraum hinsichtlich der zu verwendenden Kunststoffmaterialien gegeben ist. Außerdem weisen die ausgeschnittenen Flächenteile relativ lange Spalte auf, durch die Staub und Schmutzteile in das Innere des Gehäuses eindringen können.

In der Praxis hat sich ferner gezeigt, daß ein Benutzer eines solchen Rollbandmaßes die zentrale Anordnung des Auslöseknopfes nicht sofort als solchen erkennt und diesen fälschlich für die Achse des Systems hält.

Der Erfindung liegt die Aufgabe zugrunde die genannten Nachteile zu vermeiden und ein Rollbandmaß anzugeben, welches aus einem robusten Kunststoff der vielfältigsten Art bestehen kann, welches in der Gehäuseoberfläche für den Auslöseknopf nur minimale Einschnitte aufweist, so daß das Eindringen von Staub und Schmutzpartikel erheblich reduziert wird, wobei der Druckknopf zum Gehäuse außerhalb des Gehäusezentrums liegen soll.

Die Lösung dieser Aufgabe besteht nach der Erfindung darin, daß die Durchbohrung zur Aufnahme des Auslöseknopfes im Gehäuse-Oberteil exzentrisch zum Gehäuse angeordnet ist und der Auslöseknopf mit einem U-förmigen Element verbunden ist, in das sich eine federelastisch ausgebildete Zunge erstreckt, die an einem Ende mit den Enden der beiden Schenkel des U-förmigen Elements und mit dem Auslöseknopf verbunden ist und an deren anderes Ende die Auslöseraste angeordnet ist. Das U-förmige Element weist an beiden Außenseiten seiner Schenkel Lagerstutzen auf, deren Achse senkrecht durch die Mittelachse des Gehäuses geführt ist, welche gleichzeitig die Schwenkachse der Zunge mit ihrem Auslöseknopf bildet, wobei die Lagerstutzen jeweils von einem Lager auf der Innenseite des Gehäuse-Oberteils aufgenommen werden. Hierbei besteht jedes Lager aus einem Lagerbock, dessen Basis zur Aufnahme des Lagerstutzens ausgeformt ist. Der Auslöseknopf bildet mit seiner federelastischen Zunge und dem U-förmigen Element, in das die Zunge hineinragt, eine Baueinheit. Diese läßt sich aus einem hochwertigen Kunststoff herstellen, da zwischen dem U-förmigen Element und der federelastischen Zunge eine Vorspannung besteht, während für das Gehäuse ein Material höherer Festigkeit und ohne besondere elastische Eigenschaften verwendet werden kann.

Nach der Erfindung erstreckt sich das U-förmige Element mit der elastischen Zunge über die Mittelachse des Gehäuses. Hierdurch ergibt sich die Möglichkeit, den Auslöseknopf exzentrisch zum Gehäuse anzuordnen und einen Stift als Widerlager zur elastischen Zunge zu nutzen. Dieser Stift ist im Innern des Gehäuse-Unterteils und im Gehäusezentrum angeordnet, welcher das Ende der Rückholfeder aufnimmt und gleichzeitig im geschlossenen Zustand des Gehäuses auf die Kippachse der Zunge einwirkt und so in vorteilhafter Weise ein Widerlager bildet.

Gemäß Weiterbildung der Erfindung bildet die mit dem Auslöseknopf verbundene Zunge zur Ebene des U-förmigen Elements einen Winkel, derart, daß die am Ende der Zunge befindliche Auslöseraste gegenüber der Rücklaufperre der Zugfeder eine Vorspannung aufweist.

Das Gehäuse-Oberteil ist nach der Erfindung mit dem Gehäuse-Unterteil mittels einer integrierten Lasche verbunden. Damit vereinfachen sich sowohl die Lagerhaltung als auch die Montage erheblich. An dem Rand eines Gehäuseteils, welches der Lasche gegenüberliegt, sind zwei Raststifte und an dem Rand des anderen Gehäuseteils zwei Bohrungen zur Aufnahme der Raststifte und Verschluß der Gehäuseteile angeordnet. Damit lassen sich die Gehäusehälften in einfacher Weise zusammenklappen und mittels der Raststifte miteinander verbinden, ohne daß Verschraubungen erforderlich sind.

Auf der Innenseite des Gehäuse-Oberteils sind am Rand der Bohrung für die Aufnahme des Auslöseknopfes Anschläge angeordnet, welche zur Begrenzung des Hubweges des Auslöseknopfes in das Innere des Gehäuses dienen. Die Anschläge sind in vorteilhafter Weise mit dem Gehäuse intergriert.

In gleicher Weise ist auf der Innenseite der Fläche des Auslöseknopfes an seinem äußeren Rand in der Längsachse Zunge-Auslöseknopf ein Anschlag angeordnet und mit diesem integriert, welcher den Hubweg des Auslöseknopfes nach außen begrenzt.

Die Erfindung wird anhand der Zeichnungen näher beschrieben. Hierbei zeigen:
- Fig. 1: eine Draufsicht auf die Außenseiten des unteren und oberen Gehäuses;
- Fig. 2: einen Längsschnitt nach Fig. 1;
- Fig. 3: eine Draufsicht auf die Innenseiten des unteren und oberen Gehäuses;
- Fig. 4: eine vergrößerte Darstellung des Auslöseknopfes mit elastischer Zunge und U-förmigem Element in Draufsicht von unten;
- Fig. 5: eine Ansicht des Elements nach Fig. 4 von vorn;
- Fig. 6: einen Längsschnitt des Elements nach Fig. 4;
- Fig. 7: das Element nach Fig. 4 in einer Ansicht von oben und
- Fig. 8: eine Seitenansicht des Elements nach Fig. 4.

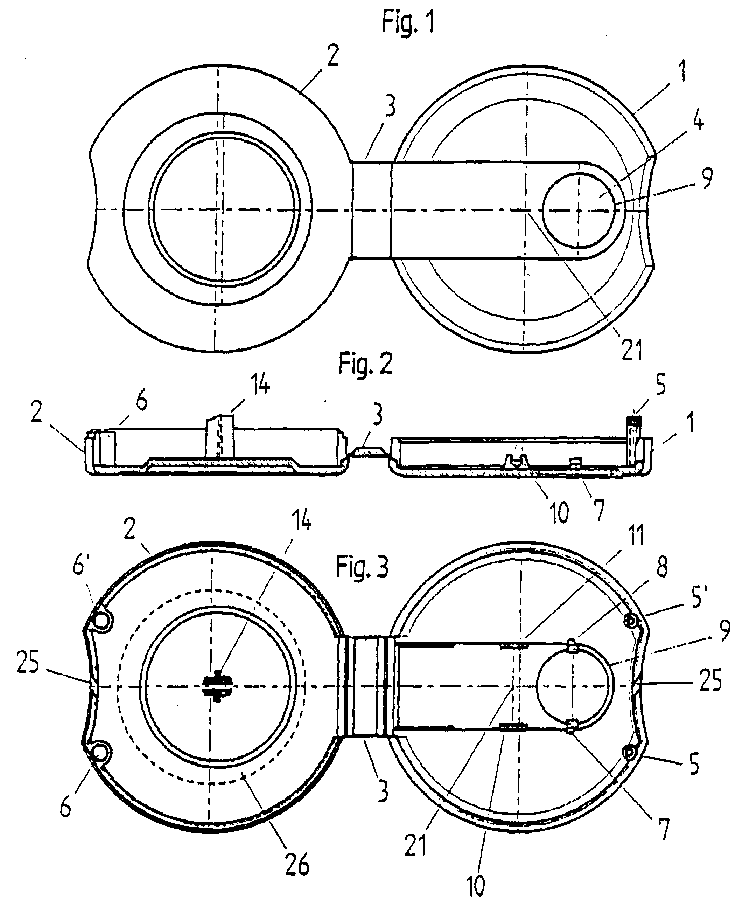

Die Figur 1 zeigt eine Draufsicht auf die Außenseiten des Gehäuse-Oberteils 1 und des Gehäuse-Unterteils 2 im aufgeklappten Zustand. Das Gehäuse-Oberteil 1 ist hierbei mit dem Gehäuse-Unterteil 2 mittels einer integrierten Lasche 3 verbunden, die im geschlossenen Zustand der Gehäuseteile den für die Lasche ausgesparten Bereich in den Gehäuseteilen voll verschließt. Der Auslöseknopf 4 befindet sich in einer Aussparung des Gehäuses 1 und bildet mit diesem nur einen engen Spalt.

Die Figur 2 zeigt die Gehäuseteile 1 und 2 im Längsschnitt. Zur Befestigung der beiden Gehäuseteile 1 und 2 sind in dem Gehäuse-Oberteil 1 Befestigungsstifte 5, 5' vorhanden, welche in entsprechende Bohrungen 6, 6' im Gehäuse-Unterteil 2 einrasten und die beiden Gehäuseteile miteinander fest verschließen, so daß keine Verschraubungen erforderlich sind. Im Boden des Gehäuse-Unterteils 2 befindet sich im Zentrum ein Stift 14, dessen Funktion anhand der Figur 3 beschrieben wird.

Im Gehäuse-Oberteil 1 sind am Bohrungsrand 9 zur unteren Hubbegrenzung des Auslöseknopfes 4 Anschläge 7 und 8 vorgesehen, welche sich in einem definierten Abstand, der den Hub des Auslöseknopfes bestimmt, über den Bohrungsrand 9 erstrecken. Die obere Hubbegrenzung des Auslöseknopfes 4 wird durch einen Anschlag bewirkt, der auf dem Auslöseknopf 4 angebracht ist und gegen eine Aussparung auf der Innenseite des Gehäuse-Oberteils 1 stößt.

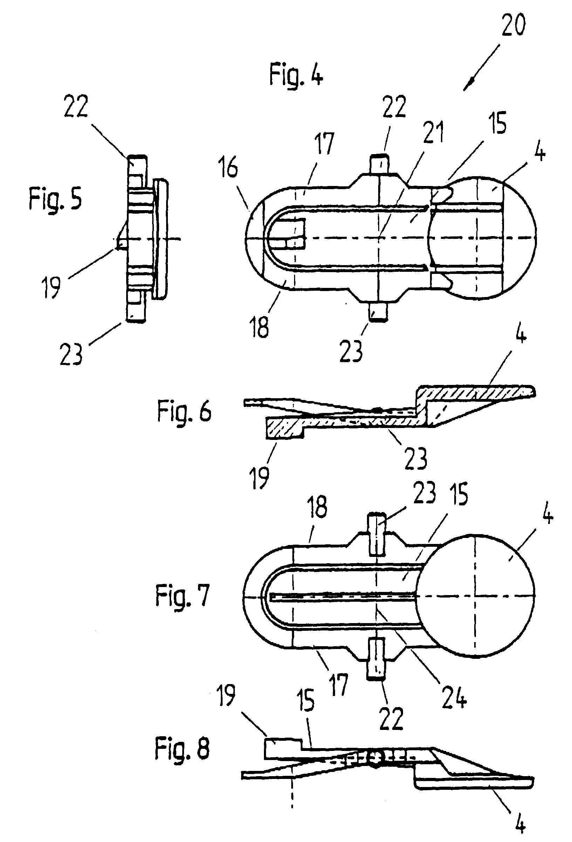

Die Lagerböcke 10 und 11 nehmen die Lagerstutzen 22 und 23 des anhand der Figuren 4 bis 8 beschriebenen Elements auf. Der Stift 14 weist einen Längsspalt auf, in dem das Ende der nicht näher dargestellten Zugfeder eingespannt wird. Das andere Ende der Zugfeder ist mit einer um den Stift 14 drehbaren Federtrommel verbunden.

Wie aus Figur 2 ersichtlich ist, ist der Stift 14 länger als die Höhe einer Gehäusehälfte, so daß er im montierten Zustand in das obere Gehäuse-Oberteil 1 hineinragt, auf die Zunge 15 stößt und für diese als Widerlager dient.

Die Figuren 4 bis 8 zeigen in vergrößerter Darstellung das Auslöseelement 20. Der Auslöseknopf 4 ist dabei mit einem U-förmigen Element 16 verbunden, in das sich die federelastisch ausgebildete Zunge 15 erstreckt, die an einem Ende mit den Enden der beiden Schenkel 17, 18 des U-förmigen Elements 16 und mit dem Auslöseknopf 4 verbunden ist und an deren anderes Ende sich die Auslöseraste 19 befindet. Das U-förmige Element 16 mit der elastischen Zunge 15 erstreckt sich über die Mittelachse 21 des Gehäuses. An dem U-förmigen Element 16 befinden sich an beiden Außenseiten seiner Schenkel 17 und 18 Lagerstutzen 22 und 23, deren gemeinsame Achse 24 senkrecht durch die Mittelachse 21 des Gehäuses geführt ist, welche gleichzeitig die Schwenkachse der Zunge 15 mit ihrem Auslöseknopf 4 bildet. Die Lagerstutzen 22, 23 werden jeweils von einem Lager 10 bzw. 11 auf der Innenseite des Gehäuse-Oberteils 1 aufgenommen.

Die mit dem Auslöseknopf 4 verbundene Zunge 15 bildet zur Ebene des U-förmigen Elements 16 mit den Schenkeln 17 und 18 einen Winkel, so daß die am Ende der Zunge 15 befindliche Auslöseraste 19 gegenüber der Rücklaufperre der nicht näher dargestellten Zugfeder eine Vorspannung aufweist. Dadurch greift die Auslöseraste 19 auf entsprechend ausgebildete keilförmige Gegenelemente, welche sich auf dem Deckel der nicht näher dargestellten Federtrommel befinden. In der Federtrommel ist eine Bandfeder aufgespult, deren Ende mit dem Stift 14 und deren anderes Ende mit der Federtrommel verbunden ist. Auf der Außenwandung der Federtrommel ist das Maßband 26 aufgewickelt und durch einen Schlitz 25 im Gehäuse 1,2 nach außen geführt.

Wie den Figuren 4, 6 und 8 zu entnehmen ist, bildet die Verbindungslinie der Lagerstutzen 22-23 die Fußlinie für die Auslenkung der Zunge 15. Auf den Mittelpunkt dieser Fußlinie stößt im montierten Zustand des Gehäuses der Stift 14 und wirkt dort als Widerlager, wenn der Auslöseknopf 4 betätigt wird.

Das Auslöseelement wird zweckmäßigerweise aus einem hochwertigen Kunststoff hergestellt, der auch eine andere Farbe als der Kunststoff für das Gehäuse besitzen kann.

Das gesamte Rollbandmaß besteht aus einem Minimum an Einzelteilen, wobei für jedes Kunststoffteil der Kunststoff verwendet werden kann, der nur nur für dieses entsprechende Teil hinsichtlich seiner Belastung oder anderer Erfordernisse angemessen ist.

## Patentansprüche

1. Rollbandmaß, bestehend aus einem Gehäuse-Ober- (1) und Gehäuse-Unterteil (2), einer Durchbohrung (9) im Gehäuse-Oberteil (1) für einen Auslöseknopf (4), einer im Gehäuse angeordneten Federtrommel mit Zugfeder, deren Ende mit dem Gehäuse-Unterteil (2) verbunden ist, einer Rücklaufsperre für die Zugfeder, einem auf der Federtrommel aufgerollten flexiblen Bandmaß und einer durch den Auslösknopf (4) betätigbaren Auslöseraste, (19) **dadurch gekennzeichnet, daß** die Durchbohrung (9) zur Aufnahme des Auslöseknopfes (4) im Gehäuse-Oberteil (1) exzentrisch zum Gehäuse angeordnet ist und der Auslöseknopf (4) mit einem U-förmigen Element (16) verbunden ist, in das sich eine federelastisch ausgebildete Zunge (15) erstreckt, die an einem Ende mit den Enden der beiden Schenkel (17, 18) des U-förmigen Elements (16) und mit dem Auslöseknopf (4) verbunden ist und an deren anderes Ende die Auslöseraste (19) angeordnet ist, wobei das U-förmige Element (16) an beiden Außenseiten seiner Schenkel (17, 18) Lagerstutzen (22, 23) aufweist, die jeweils von einem Lager (10, 11) auf der Innenseite des Gehäuse-Oberteils (1) aufgenommen werden, so daß die Achse (24) der Lagerstutzen (22,23) die Schwenkachse der Zunge (15) mit ihrem Auslöseknopf (4) bildet.

2. Rollbandmaß nach Anspruch 1, **dadurch gekennzeichnet**, daß sich das U-förmige Element (16) mit der elastischen Zunge (15) über die Mittelachse (21) des Gehäuses erstreckt.

3. Rollbandmaß nach einem der voranstehenden Ansprüche, **dadurch gekennzeichnet**, daß jedes Lager aus einem Lagerbock (10, 11) besteht, dessen Basis zur Aufnahme des jeweiligen Lagerstutzens (22, 23) ausgeformt ist.

4. Rollbandmaß nach einem der voranstehenden Ansprüche, **dadurch gekennzeichnet**, daß die mit dem Auslöseknopf (4) verbundene Zunge (15) zur Ebene des U-förmigen Elements (16) einen Winkel bildet, derart, daß die am Ende der Zunge (15) befindliche Auslösraste (19) gegenüber der Rücklaufperre der Zugfeder eine Vorspannung aufweist.

5. Rollbandmaß nach einem der voranstehenden Ansprüche, **dadurch gekennzeichnet**, daß im Innern des Gehäuse-Unterteils (2) und in seinem Zentrum ein Stift (14) angeordnet ist, welcher das Ende der Rückholfeder aufnimmt und gleichzeitig im geschlossenen Zustand des Gehäuses auf die Kippachse (bei 21) der Zunge (15) einwirkt und für diese ein Widerlager bildet.

6. Rollbandmaß nach einem der voranstehenden Ansprüche, **dadurch gekennzeichnet**, daß das Gehäuse-Oberteil (1) mit dem Gehäuse-Unterteil (2) mittels einer integrierten und flexiblen Lasche (3) verbunden ist und daß an dem Rand eines Gehäuseteils (1), welches der Lasche (3) gegenüberliegt, zwei Raststifte (5,5') und an dem Rand des anderen Gehäuseteils (2) zwei Bohrungen (6,6') zur Aufnahme der Raststifte (5,5') und Verschluß der Gehäuseteile angeordnet sind.

7. Rollbandmaß nach einem der voranstehenden Ansprüche, **dadurch gekennzeichnet**, daß auf der Innenseite des Gehäuse-Oberteils (2) am Rand der Bohrung (9) für die Aufnahme des Auslöseknopfes (4) Anschläge (7,8) zur Begrenzung des Hubweges des Auslöseknopfes (4) mit dem Inneren des Gehäuses integriert sind.

8. Rollbandmaß nach einem der voranstehenden Ansprüche, **dadurch gekennzeichnet**, daß auf der Innenseite der Fläche des Auslöseknopfes (4) an seinem äußeren Rand in der Längsachse Zunge-Auslöseknopf ein Anschlag integriert ist, welcher den Hubweg des Auslöseknopfes (4) nach außen begrenzt.

## Claims

1. Tape measure reel consisting of an upper housing part (1) and a lower housing part (2), a bore (9) in the upper housing part (1) for a release button (4) of a spring drum and tension spring arranged in the housing, the end of which is joined to the lower housing part (1), a return lock for the tension spring, a flexible tape measure rolled onto the spring drum and a release catch (19) that can be operated by the release button (4), characterised in that the bore (9) for receiving the release button (4) in the upper housing part (1) is arranged eccentrically with respect to the housing and the release button (4) is connected to a U-shaped element (16), into which a resilient tongue (15) extends, which is joined at one end to the ends of the two legs (17, 18) of the U-shaped element (16) and to the release button (4) and on the other end of which the release catch (19) is arranged, whereby the U-shaped element (16) has, on the two external faces of its legs (17, 18), bearing supports (22, 23), each of which is received by a bearing (10, 11) on the internal face of the upper housing part (1), such that the axis (24) of the bearing supports (22, 23) forms the pivoting axis of the tongue (15) with its release button (4).

2. Tape measure reel as claimed in claim 1, characterised in that the U-shaped element (16) with the resilient tongue (15) extends across the central axis (21) of the housing.

3. Tape measure reel as claimed in one of the preceding claims, characterised in that each bearing consists of a bearing block (10, 11), the base of which is shaped such as to receive the respective bearing supports (22, 23).

4. Tape measure reel as claimed in one of the preceding claims, characterised in that the tongue (15) joined to the release button (4) forms an angle with the plane of the U-shaped element (16), such that the release catch (19) located at the end of the tongue is biased opposite the return lock of the tension spring.

5. Tape measure reel as claimed in one of the preceding claims, characterised in that in the interior of the upper housing part (2) and in the centre thereof a pin (14) is arranged, which receives the end of the return spring and at the same time exerts a thrust pressure on the horizontal axis (at 21) of the tongue (15) when the housing is in the closed state.

6. Tape measure reel as claimed in one of the preceding claims, characterised in that the upper housing part (1) is joined to the lower housing part (2) by means of an integrated and flexible strap joint (3) and two catch pins (5, 5') are arranged at the edge of a housing part (1) opposite which the strap joint (3) lies and on the edge of the other housing part (2) are two bores (6, 6') for receiving the catch pins (5, 5') and lock of the housing parts.

7. Tape measure reel as claimed in one of the preceding claims, characterised in that, on the inner face of the upper housing part (2) and the edge of the bore (9) which receives the release button (4), stops (7, 8) are integrated with the interior of the housing to restrict the stroke of the release button (4).

8. Tape measure reel as claimed in one of the preceding claims, characterised in that a stop is integrated on the inner face of the surface of the release button (4) on the outer edge thereof in the longitudinal tongue/release button axis to restrict the stroke of the release button (4) towards the outside.

## Revendications

1. Mètre à ruban se composant d'une partie inférieure de boîtier (2) et d'une partie supérieure de boîtier (1), d'un perçage (9) dans la partie supérieure de boîtier (1) pour un bouton de déclenchement (4), d'un tambour à ressort disposé dans le bôitier et comprenant un ressort de traction, dont l'extrémité est reliée à la partie inférieure de boîtier (2), d'un blocage anti-retour pour le ressort de traction, d'un mètre à ruban flexible enroulé sur le tambour à ressort et d'un cran de déclenchement (19) actionnable par le bouton de déclenchement (4), caractérisé en ce que le perçage (9) destiné au logement du bouton de déclenchement (4) est disposé dans la partie supérieure de boîtier (1) de manière excentrique par rapport au boîtier et en ce que le bouton de déclenchement (4) est relié à un élément (16) en forme de U dans lequel s'étend une languette (15) élastique qui est reliée, à une extrémité, aux extrémités des deux branches (17, 18) de l'élément en U (16) et au bouton de déclenchement (4) et à l'autre extrémité de laquelle est disposé le cran de déclenchement (19), l'élément en forme de U (16) présentant, sur les deux faces externes de ses branches (17, 18), des appuis (22, 23) qui sont respectivement logés par un palier (10, 11) sur la face interne de la partie supérieure de boîtier (1), si bien que l'axe (24) des appuis (22, 23) forme l'axe de pivotement de la languette (4) avec son bouton de déclenchement (15).

2. Mètre à ruban selon la revendication 1, caractérisé en ce que l'élément en forme de U (16) s'étend par l'intermédiaire de la languette élastique (15) au-dessus de l'axe médian (21) du boîtier.

3. Mètre à ruban selon l'une des revendications précédentes, caractérisé en ce que chaque palier se compose d'un bloc de palier (10, 11) dont la base est destinée au logement des appuis respectifs (22, 23).

4. Mètre à ruban selon l'une des revendications précédentes, caractérisé en ce que la languette (15), reliée au bouton de déclenchement (4), forme un angle par rapport au plan de l'élément en forme de U (16) de sorte que le cran de déclenchement (19), se trouvant à l'extrémité de la languette (15), présente une précontrainte vis à vis du blocage anti-retour du ressort de traction.

5. Mètre à ruban selon l'une des revendications précédentes, caractérisé en ce qu'à l'intérieur de la partie inférieure de boîtier (2) et au milieu, est disposée une goupille (14) qui reçoit l'extrémité du ressort de rappel et qui agit en même temps, à l'état fermé du boîtier, sur l'axe de basculement (en 21) de la languette (15), formant ainsi pour cette dernière un contre-palier.

6. Mètre à ruban selon l'une des revendications précédentes, caractérisé en ce que la partie supérieure de boîtier (1) est reliée à la partie inférieure de boîtier (2) au moyen d'une patte flexible intégrée (3) et en ce que, sur le bord d'une partie de boîtier (1) qui est opposée à la patte (3), sont disposés deux goupilles d'arrêt (5, 5') et, sur le bord de l'autre partie de boîtier (2), deux perçages (6, 6') pour le logement des goupilles d'arrêt (5, 5') et le verrouillage des parties de boîtier.

7. Mètre à ruban selon l'une des revendications précédentes, caractérisé en ce que sur la face interne de la partie supérieure de boîtier (1), au bord du perçage (9) destiné au logement du bouton de déclenchement (4), sont intégrées des butées (7, 8) à l'intérieur du boîtier pour limiter la course du bouton de déclenchement (4).

8. Mètre à ruban selon l'une des revendications précédentes, caractérisé en ce que sur la face interne de la surface du bouton de déclenchement (4), à son bord externe, dans l'axe longitudinal du bouton de déclenchement et de la languette, est intégrée une butée qui limite la course du bouton de déclenchement (4) vers l'extérieur.
